Europäisches Patentamt

European Patent Office

Office européen des brevets

(19)

(11) Publication number: **0 020 328**
**B1**

(12)        **EUROPEAN PATENT SPECIFICATION**

(45) Date of publication of patent specification: **23.03.83**        (51) Int. Cl.³: **F 16 L 37/06**

(21) Application number: **78900204.5**

(22) Date of filing: **09.10.78**

(86) International application number:
**PCT/SE78/00049**

(87) International publication number:
**WO 80/00740 17.04.80 Gazette 80/8**

(54) **PIPE COUPLING DEVICE.**

(43) Date of publication of application:
**07.01.81 Bulletin 81/1**

(45) Publication of the grant of the patent:
**23.03.83 Bulletin 83/12**

(84) Designated Contracting States:
**DE FR GB**

(56) References cited:
**NO - C - 77 510**
**SE - B - 381 926**
**US - A - 2 080 271**

(73) Proprietor: **NOLEK SYSTEM AB**
**Segersbyvägen 4**
**S-145 63 Norsborg (SE)**

(72) Inventor: **BERGSTRAND, Gunnar Magnus**
**Stangholmsbacken 56**
**S-127 40 Skärholmen (SE)**

(74) Representative: **Modin, Jan et al,**
**c/o Axel Ehrners Patentbyra AB Smalandsgatan 2**
**S-114 34 Stockholm (SE)**

Courier Press, Leamington Spa, England

Pipe coupling device

The invention relates to a pipe coupling device, especially for temporary connection of a conduit for pressurized fluid to a pipe section.

A pipe coupling device previously known from US—A—2 080 271 comprises a cylindrical, hollow casing or body to be permanently connected to a conduit for pressurized fluid. The casing is provided with a follower nut, which is threaded onto the casing and permits the insertion of two interior gaskets and an intermediate, metallic sleeve radially between the inside of the casing and the outside of the end of a pipe section fitted into the casing. Each gasket is of a standard cylindrical dimension and is formed of resilient material such as rubber or a rubber-like composition, whereas the intermediate sleeve is provided with external and internal recesses or shoulders for receiving each of the gaskets and preventing axial displacement of the latter, when the follower nut is screwed onto the casing. Moreover, the radial dimensions of the intermediate sleeve are chosen in view of the difference between the internal diameter of the casing and the external diameter of the pipe section to be coupled thereto. Thus, upon connection, the joint will be fluid tight. Moreover, standard casings and standard gaskets can be used together with radially different intermediate sleeves for connecting pipe sections of different diameters.

GB—A—638 394 discloses a pipe coupling device for connecting a hose to a water tap. The device comprises a casing having an internal resilient sleeve and a tubular element to be permanently connected to the hose and to be moved axially in order to compress the sleeve and thereby expand it radially for frictional engagement with the end portion of the water tap. The axial displacement of the tubular element is accomplished by means of a rotatable rigid sleeve which is in threaded engagement with the tubular element. Thus, by rotating the rigid sleeve, the tubular element can be displaced so as to compress the resilient sleeve. It is also suggested that by turning the resilient sleeve inside out the sleeve will so distort that it can then more readily grip a pipe of a smaller diameter.

Furthermore, US—A—3 704 033 describes a device for permanently connecting two pipe sections to each other by means of a tubular casing which is placed externally in relation to the two pipe ends to be joined. A number of cylinder-piston units are located circumferentially inside the casing and are operable so as to be axially extended between gripping members and sealing rings providing a fluid tight seal between the inside of the casing and the outside of the respective pipe.

However, all the known devices require a rather complicated and time consuming coupling operation. Moreover, they cannot easily be adjusted to different pipe diameters. Thus, the object of the present invention is to provide a coupling device which permits a simpler and quicker coupling operation, especially for temporary connection of the device to various pipe sections, having different diameters. Particularly, such a device is intended for use in connection with leakage tests of pipes, fluid vessels, heat exchangers, motor parts and other objects which have to be fluid tight. In such a test operation, the object to be tested is normally supplied with a pressurized fluid for a relatively short period of time so as to enable the testing of a large number of units in a given time period.

For this purpose, the coupling device is of the kind stated in the preamble of claim 1 and is characterized in that the hollow casing comprises a readily detachable unit including a separate casing portion and sleeve and being easily replaceable by a similar unit having another sleeve, the radial thickness of which being adapted to a different pipe dimension, and in that the tubular element (which is to be permanently connected to the conduit) is constituted by a piston with a radially widened portion forming a piston surface to be exposed to an actuation fluid for axially displacing the tubular element during the coupling operation.

It has turned out that the inventive device, apart from permitting an easy and quick coupling operation, even when shifting from one pipe dimension to another within a substantial diameter range, has the advantage that the axial holding power, by friction between the radially expanded sleeve (upon axial compression) and the surface of the pipe, is maintained approximately at the same high level irrespective of the various pipe dimensions, in spite of the fact that the axial force, which is exerted by the pressure of the fluid and tends to axially separate the pipe from the coupling device, is heavily increased when shifting from a smaller to a greater diameter of the pipe.

Consequently, it is possible to use a constant pressure of the actuation fluid, especially air, by means of which the piston is actuated. This is of course a great advantage in industrial applications, especially in serial production involving tightness testing of each object being produced.

The invention is explained further below with reference to the drawings illustrating a preferred embodiment of the inventive device.

Fig. 1 shows in axial section a pipe coupling device according to the invention and the end of a pipe section to be connected thereto;

Fig. 2 shows a device corresponding to that of Fig. 1 but having a casing part with a resilient sleeve of a larger internal diameter adapted to fit onto a pipe section having a larger diameter than that of Fig. 1;

Fig. 3 shows a device corresponding to that of Fig. 1 and 2 but being adapted to a still larger diameter;

Fig. 4 is a diagram illustrating an essential advantage of the invention.

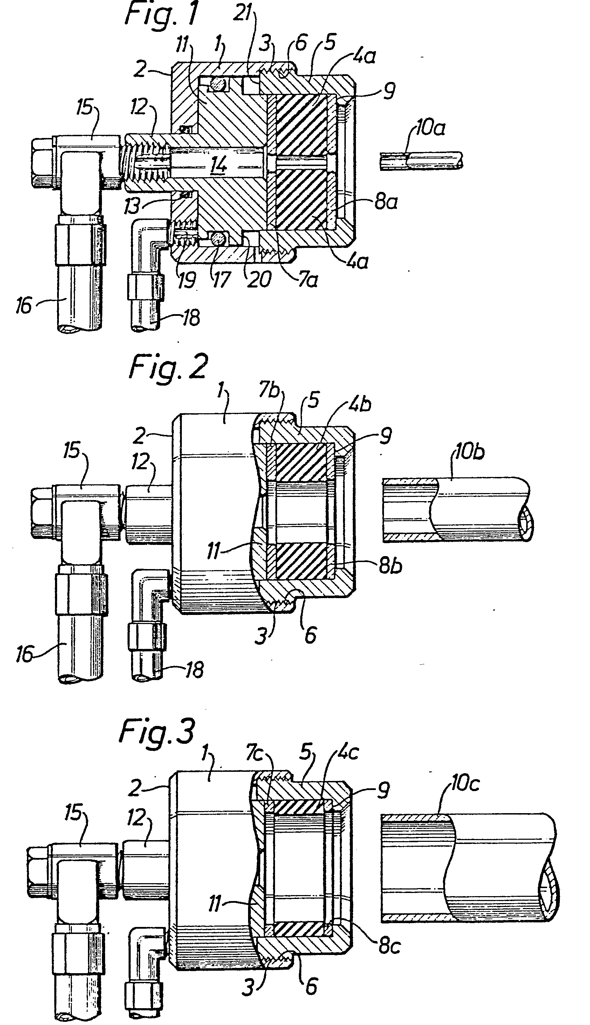

The pipe coupling device shown in Figs. 1 to 3 comprises essentially a cylindrical casing 1, preferably made of metal, such as aluminium or steel, having an end wall 2 at one end and an internal thread 3 at the other end. In accordance with the invention, a sealing sleeve 4a, 4b and 4c, respectively, of a desired dimension is replaceably disposed in the casing 1, namely in a separate cylindrical casing portion 5 which, by means of an external thread 6, is threaded into the remaining portion of the casing 1 in the thread 3. The sealing sleeve 4a, 4b, 4c is made of elastic material, such as natural or synthetic rubber and is fitted between two rigid annular washers or plates 7a and 8a, 7b and 8b, 7c and 8c, respectively, the radial dimensions of which correspond essentially to the dimensions of the sealing sleeve 4a, 4b and 4c, respectively, though the internal diameter thereof is somewhat larger than that of the sealing sleeve. The annular plate 8a, 8b, 8c situated adjacent the free end of the casing portion 5 is seated against an internal shoulder or flange thereof, whereas the inner plate 7a, 7b, 7c situated at the opposite end of the sealing sleeve 4a, 4b, 4c is axially displaceable within the casing portion 5.

In order to effect an axial compression and, as a result thereof, a radial expansion of the sealing sleeve 4a, 4b, 4c upon fitting the pipe coupling device onto the end of pipe 10a, 10b and 10c, respectively, to be connected sealingly, a piston 11 is axially moveable in the cylindrical casing 1. At one end, the piston 11 is provided with a narrower portion 12, which protrudes axially through an opening in the end wall 2 and is sealed relative to the latter by means of a sealing ring 13 (Fig. 1), e.g. an O-ring inserted into a corresponding annular groove in the surface defining the opening of the end wall 2. A central, cylindrical channel 14 extends axially through the piston 11 from one end thereof to the other. At the protruding, narrower piston portion 12 a pipe fitting 15 is permanently screwed into a thread at the outer end of the central channel 14, so that the channel 14 and the central hollow space of the sealing sleeve 4a, 4b, 4c communicate with a conduit 16 connected to the pipe fitting 15. The conduit 16 is preferably a flexible tube or hose connected to a fluid source (not shown) for the supply of pressurized fluid in the form of gas or liquid.

The inner, radially wider portion of the piston 11 forms the piston itself and is actuated by the pressure of a fluid present in the annular space defined between, on the one hand, the external surface of the piston 11 and, on the other hand, the inside of the casing 1 and its wall 2 at one side (to the left in Fig. 1) of a piston sealing ring 17. Via a conduit 18 and a port 19 in the end wall 2, a desired working pressure can be applied in the annular space so as to displace the piston 11 axially towards the sealing sleeve 4a, 4b, 4c, which under axial compression will expand radially and inwardly against the external surface of the pipe section 10a, 10b, 10c. As a result, one obtains a fluid tight seal and a frictional engagement, whereby the coupling device is held firmly onto the pipe section against the action of the axially separating force exerted by the pressurized fluid.

An essential advantage of the pipe coupling device according to the invention is that one can use the same casing 1, piston 11 and conduit 15, 16 and 18, 19, respectively, for a substantial range of the diameter of the pipe section, as illustrated by the pipe sections 10a, 10b and 10c, whereby only the casing portion 5 and the sealing sleeve 4a, 4b, 4c need to be replaced as a unit (including also the plates 7a and 8a, 7b and 8b, 7c and 8c, respectively) when shifting to another dimension of the pipe section.

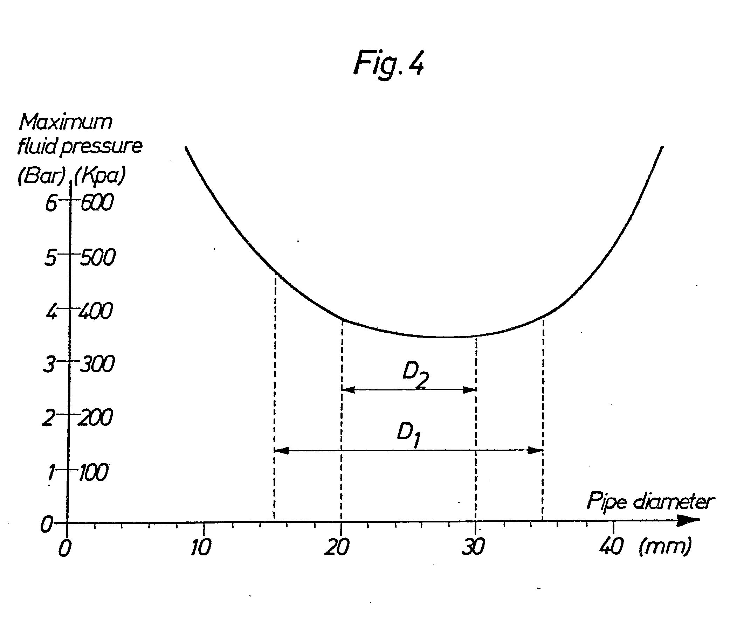

Moreover, tests have shown that the axial holding force due to the friction between the sealing sleeve 4a, 4b, 4c and the pipe section 10a, 10b, 10c is favourably related to the axially separating force exerted by the pressure in the conduit 16. Thus, the holding force increases when increasing the pipe diameter (and the diameter of the sealing sleeve) within a rather large diameter region. This is shown in Fig. 4, which is a diagram illustrating the maximum working pressure (at which the sleeve 4a, 4b, 4c barely keeps its grip around the end of the pipe) as a function of the pipe diameter. Within the interesting diameter region $D_1$ (15 to 35 mm), particularly within the region $D_2$ (20 to 30 mm), the curve is relatively flat, i.e. the maximum working pressure is essentially independent of the diameter of the pipe. Thus, it is possible to use a constant pressure of the fluid, especially air, by which the piston 11 is actuated via the conduit 18 and the port 19.

In principle, the pipe coupling device according to the invention can be modified for internal sealing of the pipe section 10a, 10b, 10c, in which case the piston 11 is preferably provided with a portion protruding from the casing portion 5, whereas the sealing sleeve 4a, 4b, 4c is to be inserted between the outer end of the casing portion 5 and an external ring flange or collar on the protruding portion of the piston.

Furthermore, the interchangeable mounting of the casing portion at the remaining part of the casing can, of course, be achieved by other means than the threads, e.g. by a bayonet-mount, a snap locking device or the like.

Moreover, as indicated in claim 3, it is possible to make use of the threads 3, 6 of the casing portions of the embodiment shown in Figs. 1 to 3 in such a way that the thread 6 is screwed only partly into the thread 3, whereas the piston 11 is provided with a stop face 20 co-operating with the inner end surface 21 of the casing portion 5, so as to form a stop means for the piston 11. If so desired, a rather high operating pressure could then be used, and the radial expansion of the sealing sleeve 4a, 4b, 4c can be controlled by an axial adjustment of the casing portion 5 relative to the casing.

## Claims

1. A pipe coupling device for connecting a conduit (16) to a pipe section (10a; 10b; 10c), comprising a hollow casing (1, 5) provided with a resilient sleeve (4a; 4b; 4c) for sealingly engaging said pipe section (10a; 10b; 10c), and a tubular element (11), which is axially moveable in the hollow casing so as to axially compress and radially expand said sleeve (4a; 4b; 4c) and which is adapted to be permanently connected to said conduit (16) for the supply of pressurized fluid axially through the interior (14) of the tubular element into said pipe section (10a; 10b; 10c), characterized in that
— said hollow casing (1, 5) comprises a readily detachable unit (5, 4a, 4b, 4c) including a separate casing portion (5) and said sleeve (4a; 4b; 4c) and being easily replaceable by a similar unit having another sleeve (4b or 4c; 4a or 4c; 4a or 4b) the radial thickness of which being adapted to a different pipe dimension, and
— said tubular element (11) is constituted by a piston with a radially widened portion forming a piston surface to be exposed to an actuation fluid for axially displacing the tubular element during the coupling operation.

2. A pipe coupling device as defined in claim 1, characterized in that said detachable unit (5, 4a, 4b, 4c) also comprises a rigid ring plate (7a, 8a; 7b, 8b; 7c, 8c) inserted axially on each side of the sleeve (4a; 4b; 4c), the radial dimensions of the two ring plates corresponding essentially to the radial thickness of said sleeve.

3. A pipe coupling device as defined in claim 1 or 2, characterized in that said separate casing portion (5) of said detachable unit (5, 4a, 4b, 4c) is mounted on the rest of the casing (1) by means of threads (3, 6), the piston (11) and the separate casing portion (5) being provided with co-operating surfaces (20, 21) forming a stop means for the piston (11).

## Revendications

1. Dispositif de raccordement pour tuyaux servant à raccorder un conduit (16) à un élément de tuyau (10a; 10b; 10c), comportant un boîtier creux (1, 5) équipé d'un manchon élastique (4a; 4b; 4c) destiné à engager de façon étanche ledit élément de tuyau (10a; 10b; 10c) et un élément tubulaire (11) qui est mobile axialement dans le boîtier creux de manière à comprimer axialement et à dilater radialement ledit manchon (4a; 4b; 4c) et qui est apte à être raccordé de façon permanente audit conduit (16) pour l'envoi d'un fluide sous pression axialement à travers l'intérieur (14) de l'élément tubulaire dans ledit élément de tuyau (10a; 10b; 10c) caractérisé en ce que le boîtier creux (1, 5) comporte une unité aisément détachable (5, 4a, 4c) incluant un élément de boîtier séparé (5) et ledit manchon (4a; 4b; 4c), et étant aisément remplaçable par une unité similaire possédant un autre manchon (4b ou 4c; 4a ou 4c; 4a ou 4b), dont l'épaisseur radiale est adaptée à une dimension différente de tuyau, et que ledit élément tublaire (11) est constitué par un piston comportant une partie élargie radialement formant une surface du piston devant être exposée à un fluide de commande pour le déplacement axial de l'élément tubulaire pendant l'opération de raccordement.

2. Dispositif de raccordement pour tuyaux selon la revendication 1, caractérisé en ce que ladite unité détachable (5, 4a, 4b, 4c) comporte également une plaque annulaire rigide (7a, 8a; 7b, 8b; 7c, 8c) insérée axialement sur chaque côté du manchon (4a; 4b; 4c), les dimensions radiales des deux plaques annulaires correspondant essentiellement à l'épaisseur radiale dudit manchon.

3. Dispositif de raccordement pour tuyaux selon l'une quelconque des revendications 1 ou 2, caractérisé en ce que ledit élément de boîtier séparé (5) de ladite unité détachable (5, 4a, 4b, 4c) est monté sur le reste du boîtier (1) au moyen de filetages (3, 6), le piston (11) et l'élément de boîtier séparé (5) étant munis de surfaces coopérantes (20, 21) formant un dispositif d'arrêt pour le piston (11).

## Patentansprüche

1. Rohrkupplung zum Verbinden einer Leitung (16) mit einem Rohrabschnitt (10a, 10b, 10c), mit einem hohlen Gehäuse (1, 5) mit einer elastischen Hülse (4a, 4b, 4c), die sich dichtend um den Rohrabschnitt (10a, 10b, 10c) anlegen soll, und einem rohrförmigen Element (11), das im hohlen Gehäuse axial bewegbar ist, um die Hülse (4a, 4b, 4c) axial zu komprimieren und radial zu expandieren, und das permanent mit der Leitung (16) verbindbar ist, um axial durch sein Inneres (14) dem Rohrabschnitt (10a, 10b, 10c) unter Druck stehendes Strömungsmittel zuzuführen, dadurch gekennzeichnet, daß das hohle Gehäuse (1, 5) eine leicht abnehmbare Einheit (5, 4a, 4b, 4c) mit einem separaten Gehäuseteil (5) und der Hülse (4a, 4b, 4c) aufweist, die sich leicht gegen eine entsprechende Einheit mit einer anderen Hülse (4b oder 4c, 4a oder 4c, 4a oder 4b) austauschen läßt, deren radiale Dicke anderen Rohrabmessungen angepaßt ist, und daß das rohrförmige Element (11) als Kolben mit einem radial aufgeweiteten Teil ausgebildet ist, der eine Kolbenfläche bildet, die zu einem betätigenden Druckmittel hin offenliegt, das das rohrförmige Element während des Ankoppelns axial verschiebt.

2. Rohrkupplung nach Anspruch 1, dadurch gekennzeichnet daß die abnehmbare Einheit (5a, 4a, 4b, 4c) weiterhin jeweils eine axial

7      **0 020 328**      8

beiderseits der Hülse (4a, 4b, 4c) angeordnete starre Ringplatte (7a, 8a, 7b, 8b, 7c, 8c) aufweist und die Radialabmessungen der zwei Ringplatten im wesentlichen der radialen Dicke der Hülse entsprechen.

3. Rohrkupplung nach Anspruch 1 oder 2, dadurch gekennzeichnet, daß der separate Gehäuseteil (5) der abnehmbaren Einheit (5, 4a, 4b, 4c) auf dem Ende des Gehäuses (1) über ein Gewinde (3, 6) befestigt ist, wobei der Kolben (11) und der separate Gehäuseteil (5) mit zusammenwirkenden Flächen (20, 21) ausgeführt sind, die einen Anschlag für den Kolben (11) bilden.

0 020 328

Fig. 1

Fig. 2

Fig. 3

# Fig.4